Europäisches Patentamt

European Patent Office

Office européen des brevets

(11) Numéro de publication: **0 130 548**
A1

## (12) DEMANDE DE BREVET EUROPEEN

(21) Numéro de dépôt: 84107385.1

(51) Int. Cl.⁴: **F 16 K 27/02,** F 16 K 31/08

(22) Date de dépôt: 27.06.84

(30) Priorité: 30.06.83 FR 8310922

(43) Date de publication de la demande: 09.01.85
Bulletin 85/2

(84) Etats contractants désignés: CH DE GB LI NL

(71) Demandeur: Bosteels, Michel, 157 av. Haras,
B-1150 Bruxelles (BE)
Demandeur: Oliva, Ambro, 180 Bd de Montmorency,
F-95170 Deuil La Barre (FR)

(72) Inventeur: Bosteels, Michel, 157 av. Haras,
B-1150 Bruxelles (BE)
Inventeur: Oliva, Ambro, 180 Bd de Montmorency,
F-95170 Deuil La Barre (FR)

(74) Mandataire: Casalonga, Axel et al, BUREAU D.A.
CASALONGA OFFICE JOSSE & PETIT
Baaderstrasse 12-14, D-8000 München 5 (DE)

(54) Dispositif de commande de débits calibrés de fluide.

(57) Dispositif de commande de débits calibrés de fluide, comprenant plusieurs vannes (1a à 1b) en parallèle, ayant un corps commun (2) recevant, dans plusieurs logements (6), plusieurs sièges et plusieurs buses calibrées interchangeables, les logements (6) étant reliés à une entrée commune (8) et à une sortie commune (7). Les vannes sont de préférence des électrovannes bistables.

EP 0 130 548 A1

1

Dispositif de commande de débits calibrés de fluide.

La présente invention se rapporte à un dispositif de commande de débits calibrés d'au moins un fluide, comprenant plusieurs vannes du type à tout ou rien en parallèle dont chacune, lorsqu'elle est ouverte, définit un débit de fluide déterminé, et des moyens pour commander lesdites vannes séparément ou suivant une combinaison quelconque.

En dehors des dispositifs à régulation, notamment des vannes à servomoteur, dont les inconvénients sont multiples (complication, encombrement, prix de revient élevé, fonctionnement lent, consommation de courant élevé) on a déjà proposé, pour établir des débits déterminés de fluide, d'utiliser plusieurs vannes en parallèle dont chacune, lorsqu'elle est ouverte, définit un débit déterminé. En commandant lesdites vannes séparément ou suivant des combinaisons déterminées, il est possible d'obtenir des débits différents bien déterminés, par exemple suivant une progression binaire 1-2-4-8-16 ou autre.

Toutefois, ces dispositifs connus font appel à plusieurs vannes séparées ce qui implique, non seulement l'utilisation d'un grand nombre de composants et d'accessoires, mais également l'établissement de multiples canalisations de raccordement de fluide et de liaisons électriques de commande des vannes. Il en résulte non seulement un prix de revient, un encombrement et une complication considérables, mais également un risque de fuites de fluide, donc une fiabilité réduite.

La présente invention a pour objet un dispositif de commande de débits de fluide à plusieurs vannes du type à tout ou rien en parallèle, qui se distingue des dispositifs connus par un encombrement réduit, une structure plus simple, une meilleure fiabilité et un prix de revient réduit.

L'invention a également pour objet un dispositif de commande de débits de fluide à commande électrique, ayant une consommation de courante réduite, d'où une faible dissipation thermique.

Par ailleurs, l'invention a pour objet un dispositif de commande de débits de fluide pouvant être commandé par des impulsions fugitives, en particulier sans conversion par les informations de sortie d'un ordinateur, d'un calculateur, d'un mini-processeur ou micro-processeur, etc...

Enfin, l'invention a également pour objet un dispositif de commande de débits de fluide qui non seulement assure que les différentes vannes conservent les positions acquises ou des positions programmées en cas de coupure d'alimentation électrique, et cela jusqu'à la réception de nouveaux ordres, mais encore permet un contrôle de la position effective des différentes vannes.

Le dispositif conforme à l'invention de commande de débits calibrés de fluide comprend, pour plusieurs vannes, un corps commun présentant plusieurs logements identiques ou similaires renfermant plusieurs sièges pour plusieurs obturateurs et plusieurs buses calibrées interchangeables définissant chacune un débit déterminé. Ce corps commun présente, en outre, au moins un canal d'entrée de fluide et au moins un canal de sortie de fluide débouchant respectivement en amont desdits sièges et en aval desdites buses dans lesdits logements.

La réunion de tout ou partie des vannes du dispositif dans un corps commun permet une réduction considérable de l'encombrement et du prix de revient, comparativement à l'utilisation d'un nombre correspondant de vannes séparées, et de supprimer la plupart des problèmes de raccordement et d'étanchéité. Les logements ménagés dans le corps commun sont tous identiques ou similaires et peuvent recevoir, au choix, des buses calibrées interchangeables en fonction des débits recherchés.

De préférence, les vannes du dispositif conformes à l'invention sont des électrovannes bistables, ce qui permet aux différentes vannes de maintenir une position acquise, ou une position programmée, même en cas de coupure d'alimentation électrique, jusqu'à la réception d'un nouvel ordre. Une consommation d'énergie électrique n'a lieu qu'au moment du changement de position des vannes.

Suivant un mode de réalisation préféré de l'invention, les électrovannes bistables comprennent un système magnétique permanent définissant les deux positions de prédilection des clapets des vannes bistables, et un système électromagnétique pour faire passer les clapets d'une position de prédilection à l'autre.

De préférence, le système magnétique permanent comprend deux aimants permanents fixes et, pour chaque vanne, un noyau magnétique mobile, solidaire du clapet de vanne. Le système électromagnétique comprend, pour chaque vanne, deux bobines susceptibles d'être alimentées dans les deux sens et disposées de manière que lorsque les deux bobines sont alimentées dans un sens, le champ de l'une renforce l'action du champ de l'un des aimants permanents sur le noyau et le champ de l'autre réduit ou annule l'action du champ de l'autre aimant permanent sur le noyau, et inversement.

Cela permet une commande rapide n'impliquant qu'une faible consommation d'énergie.

Grâce au montage de plusieurs vannes sur un corps commun, il est possible d'utiliser également des aimants permanents communs à plusieurs vannes.

De préférence, les deux bobines de chaque vanne sont alimentées dans un sens et dans l'autre à partir d'une alimentation de polarité continue, en passant par un circuit commandé par impulsion.

Pour permettre le contrôle de position des différentes vannes, le dispositif suivant l'invention est complété par un dispositif de détection de position des vannes. Ce dispositif de détection comprend dans le cas de deux bobines en série, un générateur de fréquence alimentant les bobines de chaque vanne à leurs points extrêmes. Ce dispositif comprend, en outre, un détecteur synchrone ayant une entrée de référence reliée à l'une des sorties du générateur de fréquence et une entrée de détection reliée au point commun des deux bobines en série pour déceler les variations d'impédance des bobines en fonction de la position du noyau mobile. Ce dispositif de détection dont le fonctionnement ressemble à celui d'un transformateur différentiel utilise donc les moyens de commande des vannes (bobines, noyau mobile), ce qui lui confère une grande simplicité.

En se référant au dessin annexé, on va décrire ci-après plus en détail un mode de réalisation illustratif et non limitatif d'un dispositif de commande de débits de fluide conforme à l'invention; sur le dessin :

la fig. 1 est une vue partiellement en élévation latérale et partiellement en coupe d'un dispositif conforme à l'invention à huit électrovannes;

la fig. 2 est une coupe à plus grande échelle d'une électrovanne du dispositif de la fig. 1;

la fig. 3 représente le schéma d'un circuit de commande et de détection de position des électrovannes du dispositif de la fig. 1.

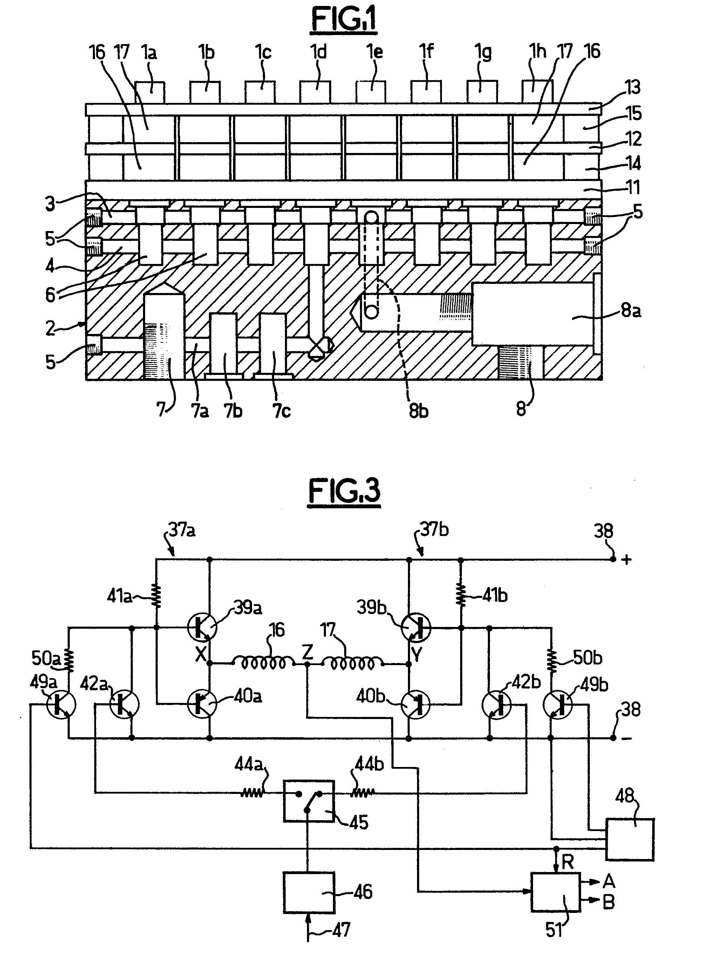

Le dispositif de commande de débits tel qu'illustré par la fig. 1 comprend huit électrovannes la à 1h montées sur un corps 2 commun. Le corps est un corps parallélépipédique massif dans lequel sont pratiqués deux trous de passage 3, 4 longitudinaux, superposés, obturés à chacune de leurs deux extrémités par un bouchon 5. Huit trous borgnes 6 identiques sont ménagés dans le corps 2, depuis la face supérieure de ce dernier, à des intervalles uniformes les uns des autres, les trous 6 coupant chacun les deux trous 3 et 4. Un trou borgne 7 taraudé permettant le raccordement d'une canalisation non représentée est ménagé depuis le bas dans le corps 2 et communique par l'intermédiaire d'un canal 7a obturé à une extrémité par un bouchon 5 avec le trou longitudinal inférieur 4. Le canal 7a passe, entre le trou 7 et le trou 4, dans deux autres trous 7b et 7c qui sont ménagés à distance l'un de l'autre dans le corps 2. Les deux trous 7b et 7c servent à recevoir deux électrodes d'un dispositif de mesure de débit du type à détermination de durée de transit, par exemple tel que décrit par la demande de brevet européen n° 80 401 098.1 publiée sous le n° 23 457. Un trou borgne 8 taraudé permettant également le raccordement d'une canalisation non représentée est ménagé depuis le bas dans le corps 2 pour déboucher dans un trou borgne longitudinal 8a servant à recevoir un filtre non représenté et communiquant par un canal 8b avec le trou longitudinal supérieur 3. Le trou 8 sert d'entrée de fluide et le trou 7 de sortie de fluide.

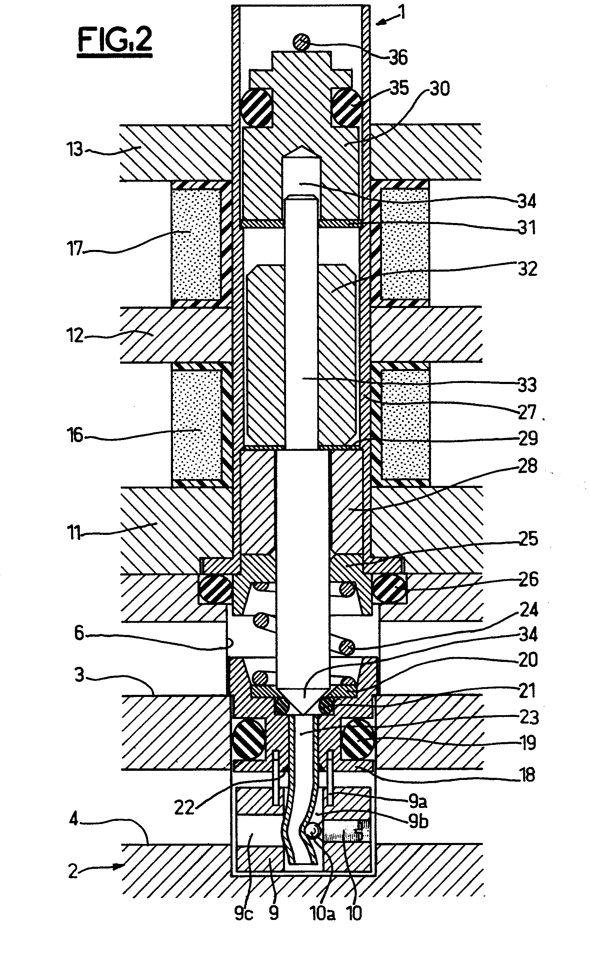

Les huit trous borgnes 6 sont destinés à recevoir chacun la partie commande de fluide d'une des électrovannes la à 1h, dont la description détaillée sera donnée en référence à la fig. 2. On reconnaît encore sur la fig. 1, au-dessus du corps 2, deux plaques 11 et 13 servant de pièces polaires et s'étendant sur toute la longueur du corps 2, une plaque intermédiaire coupée en autant de tronçons de pièces polaires que le dispositif comporte de vannes, deux aimants permanents 14 et 15 s'étendant sur toute la longueur du corps 2, l'un entre les pièces polaires 11 et 12 et l'autre entre les pièces polaire 12 et 13, ainsi que, associées à chaque électrovanne la à 1h, deux bobines 16 et 17 placées l'une entre les pièces polaires 11 et 12 et l'autre entre les pièces polaires 12 et 13.

Les aimants permanents 14 et 15 sont donc communs à l'ensemble des électrovannes la à 1h.

Telle qu'illustrée par la fig. 2, chaque électrovanne 1 est composée d'un ensemble coaxial d'éléments de révolution.

Une pièce 18 de séparation est placée dans le trou borgne 6, entre les deux trous 3 et 4, un joint torique 19 assurant l'étanchéité entre les deux trous 3 et 4 sur le pourtour extérieur de la pièce 18. La pièce 18 comporte un passage axial étagé. Ce passage axial comprend, de haut en bas, une section de grand diamètre, servant à recevoir une rondelle 20. Cette section se raccorde par un épaulement à une section de diamètre plus faible, servant à recevoir un joint torique 21. Cette dernière section se raccorde à son tour par un épaulement à une section de diamètre encore plus faible, dans laquelle est fixé par une soudure 22 un tube 23 en métal déformable, dépassant la pièce 18 vers le bas.

En dessous de là pièce 18, le trou 6 renferme un anneau de serrage 9 guidé axialement avec du jeu sur la pièce 18 par plusieurs pions 9a répartis autour du trou axial 9b de l'anneau 9. Le tube 23 fixé à la pièce 18 s'étend à travers le trou 9b jusqu'à distance en dessous d'un trou 9c ménagé diamétralement dans l'anneau 9. L'une des parties du trou 9c, jusqu'à l'intersection avec le trou 9b, est taraudée et reçoit une vis de serrage 10. Entre l'extrémité intérieure de la vis 10 et le tube 23 est disposée librement une bille 10a. Par serrage de la vis 10, la bille 10a écrase le tube 23 qui prend appui sur le bord du trou 9c opposé, suivant deux arcs diamétralement opposés. Les pions 9a permettent une mobilité axiale de l'anneau 9 par rapport à la pièce 18 pour éviter des contraintes sur le tube 23 lors du réglage et sous l'effet de dilatations thermiques. Il convient de noter que le diamètre du trou 9c est supérieur au diamètre du tube 23.

Sur la rondelle 20 prend appui un ressort 24 dont l'extrémité supérieur porte contre un coussinet de guidage 25 dont l'étanchéité, par rapport au corps 2, au-dessus du trou 3, est assurée par un joint torique 26.

Le coussinet 25 est maintenu en position de compression du ressort 24 par un fourreau 27 réalisé en un matériau non magnétique. Ce fourreau 27 renferme une masse polaire magnétique inférieure 28 portant vers le haut contre un épaulement du fourreau 27, une masse polaire magnétique supérieure 30, portant vers le bas par l'intermédiaire d'une rondelle 31 contre un épaulement du fourreau 27, et un noyau 32 solidaire d'une tige 33 conformée en clapet tronconique 34 à son extrémité inférieure. Une rondelle 23 non magnétique est intercalée entre le noyau 32 et un épaulement de la tige 33. La tige 33 guidée dans le coussinet 25 et dans la rondelle 31 servant également de coussinet coulisse avec du jeu dans un trou de passage de la masse polaire 28 et dans un trou borgne 34 de la masse polaire 30. Cette dernière est montée de façon étanche à l'aide d'un joint 35 et est immobilisée axialement à l'aide d'une goupille 36 dans le fourreau 27.

On reconnaît sur la fig. 2 qu'après avoir introduit dans l'ordre l'anneau 9 avec les pions de guidage 9a, la pièce 18 avec le tube 23, ses joints 19 et 21 et sa rondelle 20, le ressort 24 et le coussinet 25 avec son joint 26 dans le trou 6 du corps 2, et rapporté le fourreau 27 avec l'ensemble des pièces 28 à 36, il suffit de fixer les pièces polaires 11, 12 et 13 avec les bobines intermédiaires 16 et 17 et avec les aimants permanents 14 et 15 intercalaires selon la fig. 1 sur le corps 2, par tout moyen approprié. La pièce 18 est maintenue par le ressort 24 en appui contre un épaulement du trou 6, entre les deux trous 3 et 4.

La rondelle 20 sert de rondelle de butée pour limiter l'écrasement, par le clapet 34, du joint 21 servant de siège au clapet 34, qui est mobile sur une course définie par la différence entre la distance séparant les deux masses polaires 28 et 30 et la hauteur du noyau 32.

Il convient de noter que la section de passage dégagée entre le siège 21 et le clapet 34 des vannes, en position ouverte, est au moins égale à la section intérieure du tube 23 non écrasée. Dans le cas d'un faible nombre de vannes n'ayant pas de débits trop différents les tubes 23 peuvent être tous identiques, leur écrasement plus ou moins important à l'aide des vis 10 permettant d'établir les différents débits prédéterminés qui peuvent s'échelonner par exemple suivant une progression binaire 1-2-4, etc... ou autre. Dans un grand nombre de vannes et/ou d'une différence importante entre le débit minimal à établir et le débit de la vanne donnant le débit maximal, il est préférable d'utiliser au moins deux groupes de tubes de diamètres différents.

Les aimants permanents 14, 15 sont disposés de manière à présenter leurs pôles nord en face des pièces polaires 12 médianes et leurs pôles sud en face des plaques polaires 11 et 13 respectivement ou inversement. Le flux des deux aimants est donc amené par la pièce polaire 12 vers le milieu du noyau 32 en traversant ici l'entrefer que forme le fourreau non magnétique 27. Le flux magnétique de polarité opposée de chaque aimant passe par les plaques 11 et 13 également en traversant l'entrefer formé par le fourreau 27, aux deux masses polaires 28 et 30.

Les champs magnétiques des deux aimants permanents cherchent à se fermer en exerçant des forces d'attraction sur le noyau 32. Ce dernier possède donc deux positions de prédilection, l'une par rapport à l'un des aimants permanents (pièces polaires 11 et 12) et l'autre par rapport à l'autre aimant permanent (pièces polaires 13 et 12), l'un des champs se fermant pendant que l'autre s'ouvre, suivant la position du noyau 32.

Les deux bobines 16 et 17 qui servent à faire passer le noyau 32 d'une des positions de prédilection à l'autre peuvent être branchées soit en série, soit en parallèle, mais de telle manière que lorsque les deux bobines 16 et 17 sont parcourues dans un sens par le courant, le champ créé par l'une des bobines réduit ou annule l'action du champ magnétique d'un des aimants permanents sur le noyau 32, tandis que le champ de l'autre bobine renforce l'action du champ de l'autre aimant permanent sur le noyau 32. Lorsque le courant est inversé dans les bobines, ce sont les bobines inverses qui réduisent et renforcent l'action du champ des aimants permanents respectifs. Dès que le noyau 32 a atteint l'une des positions de prédilection sous l'effet du passage du courant dans un sens à travers les bobines, il est maintenu dans cette position par le champ de l'aimant permanent correspondant tant que les deux bobines ne sont pas traversées en sens inverse par le courant.

La commande du courant dans les bobines 16, 17 peut se faire par commutation électrique ordinaire.

La fig. 3 représente le schéma d'une commande électronique par impulsion du courant dans les deux bobines 16 et 17 avec une alimentation de polarité constante.

Ce circuit de commande en H comprend deux branches 37a, 37b montées en parallèle sur une alimentation 38 de polarité constante. Chaque branche 37a, 37b comporte deux transistors 39a, 40a ou 39b, 40b inversés (NPN, PNP) montés en série entre les deux bornes (+) et (−) de l'alimentation 38. Les bornes extérieures du montage en série des deux bobines 16 et 17 sont reliées aux points communs X et Y des émetteurs des transistors 39a, 40a et 39b, 40b, respectivement. Les bases des deux transistors 39a, 40a et 39b, 40b de chaque branche sont reliées entre elles et sont raccordées par l'intermédiaire d'une résistance 41a, 41b à la borne (+) de l'alimentation 38. Les collecteurs des transistors 39a, 40a et 39b, 40b sont reliés directement aux bornes (+) et (-) de l'alimentation 38.

Chaque branche 37a, 37b comprend, en outre, un transistor 42a ou 42b du type NPN dont l'émetteur est relié directement à la borne (-) de l'alimentation 38 et le collecteur directement aux bases des transistors 39a, 40a ou 39b, 40b. Les bases des transistors 42a, 42b sont reliées respectivement par une résistance 44a, 44b aux deux bornes de sortie d'un commutateur 45 dont la borne d'entrée est reliée à un générateur d'impulsion 46 susceptible d'émettre une impulsion en réponse à une commande à son entrée 47.

Le circuit tel que décrit ci-dessus est complété par un dispositif de détection de position de vanne. Ce dispositif de détection comprend un générateur de fréquence 48 émettant à ses deux sorties deux signaux alternatifs en opposition de phase. Chaque sortie du générateur 48 est reliée à la base d'un transistor 49a ou 49b du type NPN. L'émetteur des transistors 49a, 49b est donc relié à la borne (-) de l'alimentation 38 et le collecteur est relié par une résistance 50a, 50b aux bases des transistors 39a, 40a et 39b, 40b. Le dispositif de détection de position comprend en outre un détecteur synchrone 51 ayant une entrée de référence reliée à l'une des sorties du générateur 48 et une entrée de détection reliée respectivement au point commun Z des deux bobines 16 et 17.

On va décrire ci-après le mode de fonctionnement du circuit de commande et du dispositif de détection de position de vanne selon la fig. 3.

Lorsque l'alimentation 38 est branchée, et en l'absence d'ordre de commande à l'entrée 47 du générateur d'impulsion 46, les deux transistors 42a et 42b sont non passants. Les transistors 39a et 39b sont passants en raison du courant traversant les résistances 41a et 41b et alimentant les bases de ces transistors et les deux transistors 40a et 40b sont non passants. Les chutes de tension aux bornes des deux résistances 41a et 41b étant très faibles, les deux points X et Y qui sont les bornes extérieures des deux bobines 16 et 17 en série se trouvent pratiquement au potentiel de la borne (+) de l'alimentation 38. Par conséquent, aucun courant ne circule dans les deux bobines 16 et 17.

Lorsque, le commutateur 45 se trouvant dans la position représentée sur la fig. 3 de manière à relier le générateur d'impulsion 46 à la branche 37b, une impulsion est envoyée par le générateur 46, en réponse à une commande à son entrée 47, à travers la résistance de limitation d'intensité 44b à la base du transistor 42b, ce dernier devient passant de sorte qu'un courant passe à travers la résistance 41b et le transistor 42b. La chute de tension accrue aux bornes de la résistance 41b rend alors le transistor 39b non passant et le transistor 40b passant, ce qui fait que le point Y prend pratiquement le potentiel de la borne (-) de l'alimentation 38 et qu'il s'établit un passage de courant à travers le transistor 39a, les deux bobines 16 et 17 et le transistor 40b. Le noyau mobile de l'électrovanne correspondante est ainsi amené dans l'une de ses positions de prédilection. Après suppression de la commande à l'entrée 47, le noyau est maintenu dans cette position par l'aimant permanent correspondant et le circuit de commande reprend l'état initial, c'est-à-dire qu'il n'y a plus de passage de courant dans les bobines 16 et 17.

Pour amener le noyau mobile de l'électrovanne dans l'autre position de prédilection, on inverse le commutateur 45 et on envoie une impulsion du générateur 46 à travers la résistance 44a sur la base du transistor 42a qui devient ainsi passant. La chute de tension accrue aux bornes de la résistance 41a rend alors le transistor 39a non passant et le transistor 40a passant, de sorte que le point X prend pratiquement le potentiel de la borne (-) de l'alimentation 38 et qu'un courant circule à travers le transistor 39b, les bobines 17 et 16 et le transistor 40a. Sous l'effet du courant traversant les bobines 17 et 16, le noyau mobile est amené dans l'autre position de prédilection, à la suite de quoi après suppression de la commande par le générateur 46, le circuit revient à l'état initial.

Le dispositif de détection de position des électrovannes fait appel à la variation d'impédance des bobines 16 et 17 selon la position relative du noyau mobile par rapport aux bobines. On reconnaît par exemple sur la fig. 2 que dans la position représentée, le noyau mobile 32 a une action plus importante sur la bobine 16 que sur la bobine 17, de sorte que la bobine 16 présente une inductance plus élevée que la bobine 17. L'inverse est valable dans l'autre position de prédilection du noyau mobile 32.

L'envoi, par le générateur de fréquence 48, de deux trains de signaux alternatifs en opposition de phase, l'un à la base du transistor 49a, l'autre à la base du transistor 49b, rend en alternance passants ces transistors. Il s'établit donc, en alternance, un passage de courant de la borne (+) de l'alimentation 38 par la résistance 41a, la résistance 50a et le transistor 49a et de la borne (+) de l'alimentation 38 par la résistance 41b, la résistance 50b et le transistor 49b. En raison de la présence de la résistance 50a, 50b, le potentiel au point commun des résistances 41a, 50a, d'une part, et 41b, 50b, d'autre part, est modulée à une valeur inférieure à la tension d'alimentation et se retrouve aux points X et Y, respectivement les transistors 39a, 39b agissant dans le mode "copieur". Suivant les valeurs relatives des impédances des bobines 16 et 17, le potentiel au point commun Z varie par rapport aux points X et Y. Le détecteur synchrone 51 décèle le déplacement du potentiel au point Z vers la valeur existant en X ou en Y et donc décèle la phase acquise en Z suivant le déséquilibre des impédances des bobines 16 et 17. Le détecteur 51 active en conséquence, par sa sortie A ou B, un dispositif de visualisation ou, en cas de commande automatique, un dispositif de contrôle de position.

La commande du dispositif conforme à l'invention est compatible sans conversion avec les informations de sortie d'un ordinateur, d'un calculateur, d'un mini processeur ou microprocesseur, etc... Ce dispositif constitue donc un élément de conversion le plus direct et le plus rapide entre la grandeur physique à régler et l'électronique de commande, au contraire des systèmes de régulation connus qui nécessitent plusieurs transformations mécaniques, électriques, électroniques, pour traduire les ordres de commande.

La détection de position des vannes et le renvoi de l'information concernant les positions réelles des vannes répondent parfaitement aux besoins de l'organisation des systèmes informatiques interactifs.

La prévision d'un débitmètre ou plutôt des deux électrodes de détection d'un débitmètre sur le corps du dispositif permet de renvoyer à la commande également l'information du débit réel.

Il va de soi que le mode de réalisation décrit ci-dessus et représenté sur le dessin annexé n'a été donné qu'à titre illustratif et non limitatif et que de nombreuses modifications et variantes sont possibles dans le cadre de l'invention. Ainsi, la structure des différentes électrovannes et notamment la réalisation des buses calibrées qui peuvent également être non réglables peut être différente de celle représentée. Ces buses peuvent par exemple être constituées par les pièces 18 qui au lieu des tubes 23 comportent directement des orifices calibrés réalisés par tout procédé approprié (perçage, étincelage, ultrasons, laser, etc...).

Le système magnétique permanent définissant les deux positions de prédilection du noyau mobile des électrovannes peut comprendre un aimant permanent unique agissant par un pôle sur les deux pièces polaires 11 et 13 et par l'autre pôle sur la pièce polaire 12.

En cas de montage en parallèle des deux bobines 16 et 17, le circuit de commande et le circuit de détection de position devraient évidemment être modifiés en conséquence. Ces circuits peuvent par ailleurs être réalisés avec d'autres composants électroniques connus.

Dans l'exemple de réalisation représenté, les vannes calibrées sont utilisées en action directe, c'est-à-dire que les buses calibrées sont disposées directement en aval des clapets commandés. Cependant, le dispositif conforme à l'invention se prête également à des vannes à action indirecte ou pilote. Dans ce cas, les vannes commandées servent à piloter une autre série de clapets en utilisant, soit l'énergie propre du fluide, soit un fluide auxiliaire tel que l'air comprimé ou un liquide, les orifices calibrés étant dans ce cas disposés en aval des clapets ainsi assistés. Ici également, l'ensemble est disposé dans un corps commun.

Il y a également lieu de noter que le dispositif conforme à l'invention peut être utilisé pour procéder par exemple à des mélanges dosés de plusieurs fluides, ou à des divisions dosées d'un fluide, auxquels cas des groupes de vannes en parallèle sont associés à plusieurs entrées et/ou à plusieurs sorties.

Bien entendu, le dispositif suivant l'invention n'est à même de fournir des débits bien déterminés qu'à condition que la pression du fluide soit régulée en amont.

A titre d'exemple, un dispositif conforme à l'invention comprenant sept électrovannes commandant le passage par sept orifices calibrés échelonnés suivant une progression binaire, le plus petit orifice définissant un débit de 1, permet d'obtenir par addition 127 débits différents échelonnés de 1 à 127. Dans de nombreux cas, il est avantageux de prévoir, sur le même dispositif, une électrovanne supplémentaire permettant un débit non calibré nettement plus important que celui obtenu par addition des débits de toutes les électrovannes calibrées, en vue d'un remplissage rapide des canalisations, réservoirs, etc...

Une application particulièrement avantageuse de l'invention réside dans la commande de débits de fluides cryogéniques. En effet, les vannes ne dissipant que très peu d'énergie, uniquement aux changements de position, le dispositif conforme à l'invention peut être disposé dans son ensemble directement à la température du fluide cryogénique. Contrairement à l'utilisation de vannes classiques, aucune traversée mécanique mobile n'est nécessaire dans l'enceinte renfermant le dispositif.

## REVENDICATIONS

1. Dispositif de commande de débits calibrés d'au moins un fluide, comprenant plusieurs électrovannes (1a à 1h) bistables, du type à tout ou rien, dont chacune, lorsqu'elle est ouverte, définit un débit déterminé, ces vannes étant montées dans un corps commun (2) présentant plusieurs logements identiques ou similaires (6) renfermant plusieurs sièges (18,19,20,21) pour plusieurs clapets de vannes (34) et plusieurs buses calibrées (23) définissant chacune un débit déterminé, ainsi qu'au moins un canal d'entrée de fluide (8) et au moins un canal de sortie de fluide (7) débouchant respectivement en amont desdits sièges et en aval desdites buses dans lesdits logements, caractérisé par le fait que les électrovannes bistables comprennent un système magnétique permanent définissant les deux positions de prédilection des clapets des vannes et, pour chaque vanne, un système électromagnétique pour faire passer le clapet d'une position de prédilection à l'autre.

2. Dispositif suivant la revendication 1, caractérisé par le fait que le système magnétique permanent comprend deux aimants permanents (14,15) fixes et, pour chaque vanne, un noyau magnétique mobile (32), solidaire du clapet (34) et que le système électromagnétique comprend, pour chaque vanne, deux bobines (16,17) susceptibles d'être alimentées dans les deux sens et disposées de manière que lorsque les deux bobines sont alimentées dans un sens, le champ de l'une renforce l'action du champ de l'un des aimants sur le noyau et le champ de l'autre réduit ou annule l'action du champ de l'autre aimant sur le noyau, et inversement.

3. Dispositif suivant la revendication 1, caractérisé par le fait que les aimants permanents (14,15) sont communs à plusieurs vannes.

4. Dispositif suivant la revendication 2 ou 3 caractérisé par le fait que les deux bobines (16,17) de chaque vanne sont alimentées dans un sens et dans l'autre à partir d'une alimentation (38) de polarité continue, en passant par l'intermédiaire d'un circuit commandé par impulsion.

5. Dispositif suivant la revendication 4, caractérisé par le fait qu'il comprend, lorsque les deux bobines (16,17) sont en série, pour chaque vanne, un dispositif de détection de position de la vanne, comprenant un générateur de fré-

14

quence (48) alimentant les deux bobines (16,17) à leurs
points extrêmes et un détecteur synchrone (51) ayant une entrée
de référence (R) reliée à l'une des sorties du générateur de
fréquence (48) et une entrée de détection reliée au point commun (Z) des bobines (16,17), pour déterminer la position du
noyau mobile sur la base des variations d'impédance que subissent les bobines en fonction de la position du noyau mobile.

0130548

1/2
**FIG.1**

**FIG.3**

FIG.2

2/2

0130548

Office européen
des brevets

**RAPPORT DE RECHERCHE EUROPEENNE**

Numéro de la demande

EP 84 10 7385

| **DOCUMENTS CONSIDERES COMME PERTINENTS** | | | |
|---|---|---|---|
| Catégorie | Citation du document avec indication, en cas de besoin, des parties pertinentes | Revendication concernée | **CLASSEMENT DE LA DEMANDE (Int. Cl. ³)** |
| A | EP-A-0 029 225 (ZERBY) | | F 16 K 27/02<br>F 16 K 31/08 |
| | --- | | |
| A | GB-A-1 385 031 (PROCESS SYSTEMS) | | |
| | --- | | |
| A | US-A-3 726 296 (FRIEDLAND) | | |
| | --- | | |
| A | US-A-4 248 263 (A.W. LANGILL) | | |
| | --- | | |
| A | US-A-3 502 105 (ERNYEI) | | |
| | --- | | **DOMAINES TECHNIQUES RECHERCHES (Int. Cl. ³)** |
| A | US-A-2 229 903 (SCHMOHL) | | |
| | --- | | F 16 K 27/00<br>F 16 K 31/00 |
| A | US-A-4 019 533 (JERDE) | | |
| | --- | | |
| A,D | EP-A-0 023 457 (OLIVA) | | |
| | ----- | | |

Le présent rapport de recherche a été établi pour toutes les revendications

| Lieu de la recherche<br>LA HAYE | Date d'achèvement de la recherche<br>12-09-1984 | Examinateur<br>VERELST P.E.J. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

   & : membre de la même famille, document correspondant

OEB Form 1503 03 82